# EUROPÄISCHE PATENTANMELDUNG

(11) **EP 2 581 468 A1**
(43) Veröffentlichungstag der Anmeldung: **17.04.2013**
(21) Anmeldenummer: 11185210.9
(22) Anmeldetag: 14.10.2011
(51) Int. Cl.: C23C 8/64, C23C 8/80, B23K 35/32, B23P 6/04, F01D 5/00

(54) **Verfahren zum Aufbringen einer Verschleißschutzschicht auf eine Strömungsmaschinenkomponente**

(71) Anmelder: Siemens Aktiengesellschaft, 80333 München (DE)
(72) Erfinder: Barnikel, Jochen, 45470 Mülheim an der Ruhr (DE); Gollerthan, Susanne, 44787 Bochum (DE); Krappitz, Harald, 73230 Kirchheim unter Teck (DE); Reinkensmeier, Ingo, 58730 Fröndenberg (DE)

(57) **Zusammenfassung**

Ein Verfahren zum Aufbringen einer Verschleißschutzschicht (4) auf eine Strömungsmaschinenkomponente, welche einen Titan aufweisenden Grundwerkstoff (3) aufweist, weist folgende Schritte auf: Mischen eines Lots (12), welches eine Titan aufweisende Legierung (6) und Partikel aufweist, die in der Legierung (6) verteilt sind und ein Reaktionsmittel (5) aufweisen; Aufbringen des Lots (12) auf vorherbestimmte Stellen der Strömungsmaschinenkomponente; Einbringen einer Wärmemenge in das Lot (12) und in die Strömungsmaschinenkomponente, so dass die Legierung (6) flüssig wird und sich das Reaktionsmittel (5) durch Diffusionsvorgänge mit dem Lot verändert und unter Ausbildung eines Hartstoffs (8) mit der Legierung (6) eine chemische Reaktion eingeht; Abkühlen des Lots (12), so dass die Legierung (6) fest wird.

## Beschreibung

Das Verfahren betrifft ein Verfahren zum Aufbringen einer Verschleißschutzschicht auf eine Strömungsmaschinenkomponente.

Eine Gasturbine weist einen Verdichter und eine Turbine auf. Sowohl im Verdichter als auch in der Turbine kommen Schaufeln zum Einsatz, unterschieden werden dabei feststehende Leitschaufeln und rotierende Laufschaufeln.

Als Material für die Laufschaufeln werden unter anderem Titanlegierungen eingesetzt, welche eine hohe Festigkeit, eine niedrige Dichte sowie eine gute Korrosionsbeständigkeit haben. Nachteilig haben die Titanlegierungen eine hohe Kerbempfindlichkeit und eine hohe Rissempfindlichkeit.

Insbesondere die Laufschaufeln sind verschiedenen Verschleißprozessen ausgesetzt, z.B. ein Verschleiß durch Reibung oder durch Oxidation. Speziell in einer Dampfturbine tritt als Verschleißprozess eine Tropfenschlagerosion auf. In der Dampfturbine bilden sich Nebeltröpfchen aus Wasser, die von den Leitschaufeln eingefangen werden, dort akkumulieren und von den Austrittskanten der Leitschaufeln als Wassertropfen abreißen. Die Wassertropfen haben eine geringe Absolutgeschwindigkeit, aber aufgrund der Rotation der Laufschaufeln haben sie eine große Relativgeschwindigkeit zu den Laufschaufeln. Schlagen die Wassertropfen mit ihrer großen Relativgeschwindigkeit auf die Laufschaufeln auf, so führt dies zu einer Bildung von Kerben auf der Oberfläche der Laufschaufeln.

Für eine Reduzierung der Tropfenschlagerosion stehen verschiedene Verfahren zur Auswahl. Auf der Oberfläche der Laufschaufel kann eine gegen Tropfenschlagerosion beständige Schicht durch thermisches Spritzen aufgetragen werden. Des Weiteren kann eine harte Schicht auf die Oberfläche der Laufschaufel durch Schweißen aufgebracht werden. Jedoch erhöht sich durch die genannten Verfahren nachteilig die Rissempfindlichkeit der Laufschaufeln, insbesondere an den Grenzflächen zwischen der Titanlegierung und der harten Schicht, wodurch die Lebensdauer der Laufschaufeln reduziert wird. Weiterhin ist nachteilig, dass die Schichten nach einer Beschädigung durch Tropfenschlagerosion nicht wieder auf die Laufschaufel aufgebracht werden können, weil die genannten Verfahren eine glatte Oberfläche erfordern.

Aufgabe der Erfindung ist es, ein Verfahren zum Aufbringen einer Verschleißschutzschicht auf eine Strömungsmaschinenkomponente und die Strömungsmaschinenkomponente mit der Verschleißschutzschicht zu schaffen, wobei das Verfahren einfach und wiederholt anwendbar ist sowie die Strömungsmaschinenkomponente eine lange Lebensdauer hat.

Das erfindungsgemäße Verfahren zum Aufbringen einer Verschleißschutzschicht auf eine Strömungsmaschinenkomponente, welche einen Titan aufweisenden Grundwerkstoff aufweist, weist folgende Schritte auf: Mischen eines Lots, welches eine Titan aufweisende Legierung und Partikel aufweist, die in der Legierung verteilt sind und ein Reaktionsmittel aufweisen; Aufbringen des Lots auf vorherbestimmte Stellen der Strömungsmaschinenkomponente; Einbringen einer Wärmemenge in das Lot und in die Strömungsmaschinenkomponente, so dass die Legierung flüssig wird und sich das Reaktionsmittel durch Diffusionsvorgänge mit dem Lot verändert und unter Ausbildung eines Hartstoffs mit der Legierung eine chemische Reaktion eingeht; Abkühlen des Lots, so dass die Legierung fest wird.

Dadurch, dass in dem erfindungsgemäßen Verfahren der Hartstoff ausgebildet wird, wird die Verschleißschutzschicht vorteilhaft hart ausgebildet. Harte Materialien haben eine höhere Beständigkeit gegenüber Verschleiß, insbesondere gegenüber einer Tropfenschlagerosion, so dass die in dem Verfahren hergestellte Verschleißschutzschicht vorteilhaft eine lange Lebensdauer hat. Das Verfahren ist vorteilhaft einfach und auf beliebige Geometrien von Strömungsmaschinenkomponenten anwendbar. Weil sowohl der Grundwerkstoff als auch das Lot Titan aufweisen, haben der Grundwerkstoff und das Lot ähnliche physikalische Eigenschaften, wodurch sich vorteilhaft eine gute Anbindung von dem Lot an den Grundwerkstoff ergibt. Durch die gute Anbindung wird vorteilhaft die Bildung von Rissen an der Grenzfläche von dem Grundwerkstoff und dem Lot vermindert. Eine stark belastete Strömungsmaschinenkomponente ist beispielsweise eine Laufschaufel einer Dampfturbine. Die Risse können insbesondere in der Laufschaufel auftreten, weil die Laufschaufel im Betrieb der Dampfturbine einer hohen Fliehkraft sowie Schwingungen ausgesetzt ist. Dadurch, dass sich das Reaktionsmittel durch Diffusionsvorgänge mit Lot verändert, werden Zonen aus dem Hartstoff ausgebildet, die größer als die ursprünglichen Partikel sein können.

Weil das Verfahren keine glatten Oberflächen der Strömungsmaschinenkomponente erfordert, eignet es sich vorteilhaft auch als Reparaturverfahren für bereits erodierte Oberflächen eingesetzt zu werden. Indem das Lot verflüssigt wird, kann es vorteilhaft in Risse, Kerben, Mulden und Krater eindringen und diese ausfüllen. Eine Voraussetzung für die Reparatur von Rissen ist, dass die Risse frei von Oxiden sind. Denkbar sind weiterhin beliebige Geometrien von Oberflächenabtragungen. Durch eine Nacharbeit kann vorteilhaft die ursprüngliche Oberflächenkontur der Strömungsmaschinenkomponente wieder hergestellt werden. Ferner kann, wenn die Verschleißschutzschicht erodiert ist, das Verfahren wiederholt durchgeführt werden und die ursprüngliche Oberflächenkontur wieder hergestellt werden.

Bevorzugt ist das Reaktionsmittel ein Nichtmetall, ein Halbmetall und/oder eine Keramik. Das Reaktionsmittel ist bevorzugt eine kohlenstoffhaltige Verbindung, insbesondere Graphit, und der Hartstoff Titancarbid wird gebildet. Graphit bildet in dem Verfahren in einer chemischen Reaktion mit dem Titan der Legierung Titancarbid, welches vorteilhaft hart ist und daher eine gute Beständigkeit gegen den Verschleiß hat, insbesondere gegen die Tropfenschlagerosion.

Das Lot wird bevorzugt derart hergestellt, dass es eine Matte, eine Paste, ein vorgesintertes Material (engl. "presintered preforms, PSP") oder ein Band, insbesondere ein klebendes Band ist. Die Matte eignet sich, wenn eine großflächige Verschleißschutzschicht auf die Strömungsmaschinenkomponente aufgebracht wird. Die Matte ist bevorzugt biegsam, so dass die Matte an beliebigen Oberflächenkonturen der Strömungsmaschinenkomponente aufgetragen werden kann. Hingegen eignen sich die Paste, das vorgesinterte Material und das Band, wenn die Verschleißschutzschicht lokal als Reparaturschicht auf besonders erodierte Stellen der Strömungsmaschinenkomponente aufgebracht wird.

Die Partikel sind bevorzugt plättchenförmig und/oder kugelförmig. Die plättchenförmigen Partikel sind bevorzugt im Wesentlichen schichtartig planparallel angeordnet. Bei einer schichtartigen und planparallelen Anordnung der Partikel ergeben sich nach der chemischen Reaktion schichtartig und planparallel angeordnete Zonen aus dem Hartstoff, welche vorteilhaft eine hohe Beständigkeit gegen Verschleiß, insbesondere gegen die Tropfenschlagerosion, haben. Die Zusammensetzung der Legierung wird bevorzugt derart gewählt, dass die Schmelztemperatur der Legierung niedriger als die Beta-Transus-Temperatur des Grundwerkstoffs ist. Die Beta-Transus-Temperatur von reinem Titan liegt bei ca. 880°C. Unterhalb dieser Temperatur ist die Gitterstruktur des Titans eine hexagonal dichteste Kugelpackung, oberhalb dieser Temperatur bildet sich eine kubisch raumzentrierte Gitterstruktur aus. Ein Wechsel der Gitterstruktur verkürzt die Lebensdauer der Strömungsmaschinenkomponente. Indem die Schmelztemperatur der Legierung unterhalb der Beta-Transus-Temperatur liegt, wird der Wechsel der Gitterstruktur des Grundwerkstoffs vermieden, wodurch die Lebensdauer der Strömungsmaschinenkomponente vorteilhaft lang ist.

Die Legierung ist bevorzugt ein Hartlot, insbesondere mit einer Schmelztemperatur zwischen 750°C und 950°C. Das Hartlot ist vorteilhaft beständig gegen eine Tropfenschlagerosion.

Die Wärmemenge und deren Einbringzeit werden bevorzugt derart bestimmt, dass die Temperaturen des Lots und der Strömungsmaschinenkomponente niedriger als die Beta-Transus-Temperatur des Grundwerkstoffs sind. Dadurch kann vorteilhaft der Wechsel der Gitterstruktur des Titans bzw. der Titanlegierung vermieden werden. Des Weiteren werden die Wärmemenge und deren Einbringzeit vorteilhaft derart bestimmt, dass das Reaktionsmittel bevorzugt vollständig in der Titan-Matrix aufgeht und somit das Hartstoff Partikel gebildet werden kann. Die zur Umsetzung des Reaktionsmittels benötigte Wärmemenge und die Einbringzeit hängen von der Größe der Partikel sowie von der Masse der Strömungsmaschinenkomponente ab.

Die Wärmemenge und deren Einbringzeit werden bevorzugt derart bestimmt, dass das Reaktionsmittel teilweise durch Diffusion in den Grundwerkstoff gelangt und dort unter Ausbildung des Hartstoffs mit dem Grundwerkstoff eine chemische Reaktion eingeht. Neben dem Reaktionsmittel gelangt dabei auch die Legierung teilweise in den Grundwerkstoff. Analog dazu gelangt durch Diffusion Material aus dem Grundwerkstoff in die Verschleißschutzschicht. Durch die Diffusion und indem der Hartstoff auch in dem Grundwerkstoff gebildet wird, gibt es keine sprunghaften Unterschiede mehr in den Eigenschaften, wie z.B. dem Elastizitätsmodul oder der Härte, zwischen dem Grundwerkstoff, dem Hartstoff und der Legierung. Die sprunghaften Unterschiede sind anfällig für die Bildung von Rissen, so dass die Lebensdauer der Verschleißschutzschicht vorteilhaft lang ist.

Bevorzugt weist der Grundwerkstoff eine Titanlegierung, insbesondere TiAl6V4, reines Titan und/oder reines Titan mit Zusatzstoffen, insbesondere Kohlenstoff als Zusatzstoff, auf. TiAl6V4 hat eine Beta-Transus-Temperatur von ca. 960°C bis 985°C.

Die erfindungsgemäße Strömungsmaschinekomponente weist eine Verschleißschutzschicht auf, die mit dem erfindungsgemäßen Verfahren hergestellt ist.

Im Folgenden wird das erfindungsgemäße Verfahren zum Aufbringen einer Verschleißschutzschicht auf eine Strömungsmaschinenkomponente anhand der beigefügten schematischen Zeichnungen erläutert. Es zeigen:
- Figuren 1 und 3: einen Schnitt eines Oberflächenbereichs einer Strömungsmaschinenkomponente mit einem Lot vor einer Wärmezufuhr und
- Figuren 2 und 4: einen Schnitt des Oberflächenbereichs der Strömungsmaschinenkomponente aus Figuren 1 und 3 mit einer nach der Wärmezufuhr ausgebildeten Verschleißschutzschicht.

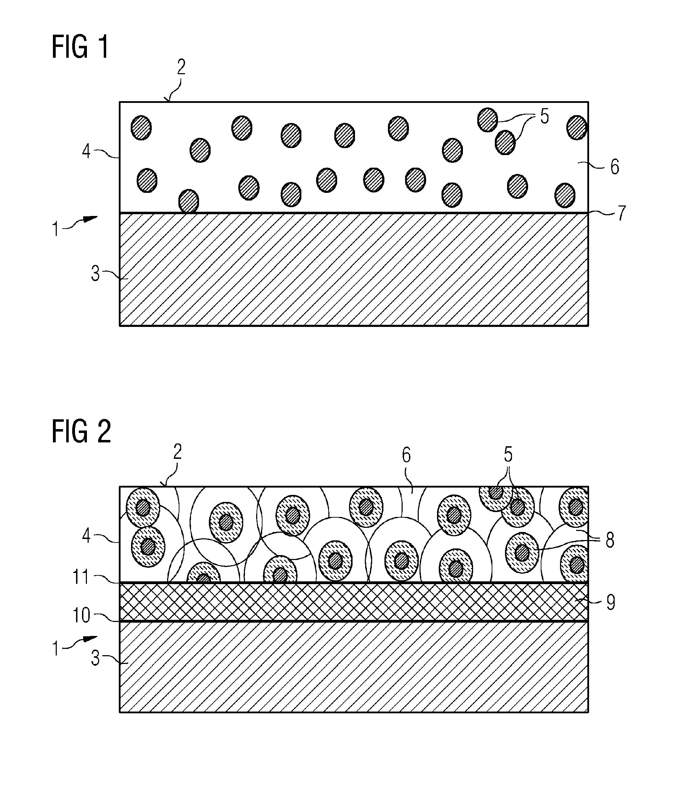

Eine Strömungsmaschinenkomponente, wie z.B. eine Laufschaufel einer Dampfturbine, weist einen Oberflächenbereich 1 auf. Wie es aus den Figuren 1 bis 4 ersichtlich ist, weist der Oberflächenbereich 1 eine oben liegende Oberfläche 2 auf. Die Oberfläche 2 ist einem Verschleiß ausgesetzt. Der Oberflächenbereich weist einen unten liegenden Grundwerkstoff 3 und ein oben liegendes Lot 12, bzw. eine oben liegende Verschleißschutzschicht 4 auf.

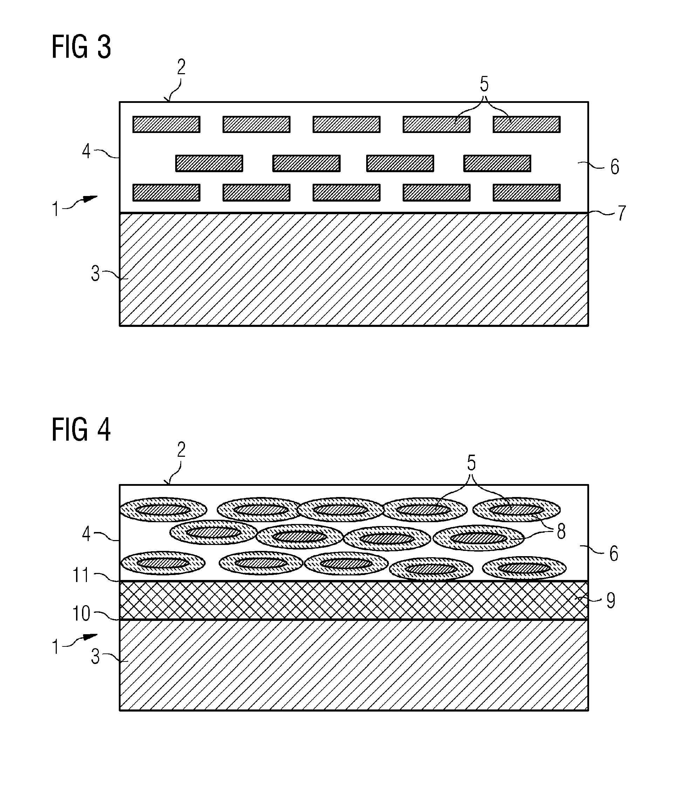

Wie es aus Figuren 1 und 3 ersichtlich ist, sind der Grundwerkstoff 3 und das Lot 12 aufeinanderliegend angeordnet, wobei beide Teile den Oberflächenbereich 1 bilden. Zwischen dem Grundwerkstoff 3 und dem Lot 12 ist eine parallel zur Oberfläche 2 angeordnete Grenzfläche 7 ausgebildet.

Das Lot 12 weist eine Legierung 6 auf, in der eine Mehrzahl an Partikeln aus einem Reaktionsmittel 5 eingebettet ist. In Figur 1 sind die Partikel kugelförmig und in dem Lot 12 verteilt. In Figur 3 sind die Partikel quaderförmig, mit ihren längeren Seiten parallel zu der Grenzfläche 7 ausgerichtet und in einer Mehrzahl an Schichten angeordnet, wobei die Partikel zueinander versetzt, d.h. auf Lücke, angeordnet sind.

Durch die Wärmezufuhr wird aus dem Lot 12 die Verschleißschutzschicht 4 gebildet. Durch die Wärmezufuhr kann durch Diffusion sowohl Material aus der Verschleißschutzschicht 4 in den Grundwerkstoff 3 gelangen, als auch Material aus dem Grundwerkstoff 3 in die Verschleißschutzschicht 4 gelangen. Wie es aus Figuren 2 und 4 ersichtlich ist, hat sich nach der Wärmezufuhr zwischen dem Grundwerkstoff 3 und der Verschleißschutzsicht 4 auf Kosten beider eine Diffusionszone 9 mit einem unteren Ende 10 und einem oberen Ende 11 ausgebildet. Die Enden 10, 11 verlaufen parallel zur Oberfläche 2. Durch die Wärmezufuhr ist die Legierung 6 flüssig geworden und das Reaktionsmittel 5 hat sich teilweise in der Legierung 6 gelöst. Das gelöste Reaktionsmittel 5 ist unter Ausbildung eines Hartstoffs 8 mit der Legierung 6 eine chemische Reaktion eingegangen.

Wie es aus Figur 2 ersichtlich ist, sind die kugelförmigen Partikel nach Wärmezufuhr im Vergleich zu Figur 1 kleiner geworden. Die Partikel können jedoch auch gleich groß bleiben. Um das Reaktionsmittel 5 herum haben sich kugelförmige, überlappende Zonen aus dem Hartstoff 8 gebildet. Die Ränder der Zonen verlaufen parallel zu den Oberflächen der dazugehörigen Partikel. Wie es aus Figur 4 ersichtlich ist, sind die quaderförmigen Partikel nach der Wärmezufuhr im Vergleich zu Figur 3 kleiner geworden und haben eine ellipsoide Form angenommen, wobei die lange Achse parallel zu der Oberfläche 2 und die kurze Achse senkrecht dazu angeordnet ist. Die Partikel können jedoch auch ihre Form beibehalten. Um die Partikel herum haben sich ellipsoide, überlappende Zonen aus dem Hartstoff 8 gebildet. Die Ränder der Zonen verlaufen parallel zu den Oberflächen der Partikel. Wie es aus Figuren 2 und 4 ersichtlich ist, erstrecken sich die Zonen aus dem Hartstoff 8 sowohl in der Verschleißschutzschicht 4 als auch in der Diffusionszone 9.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Aufbringen einer Verschleißschutzschicht (4) auf eine Strömungsmaschinenkomponente, welche einen Titan aufweisenden Grundwerkstoff (3) aufweist, mit den Schritten:
- Mischen eines Lots (12), welches eine Titan aufweisende Legierung (6) und Partikel aufweist, die in der Legierung (6) verteilt sind und ein Reaktionsmittel (5) aufweisen;
- Aufbringen des Lots (12) auf vorherbestimmte Stellen der Strömungsmaschinenkomponente;
- Einbringen einer Wärmemenge in das Lot (12) und in die Strömungsmaschinenkomponente, so dass die Legierung (6) flüssig wird und sich das Reaktionsmittel (5) durch Diffusionsvorgänge mit dem Lot verändert und unter Ausbildung eines Hartstoffs (8) mit der Legierung (6) eine chemische Reaktion eingeht;
- Abkühlen des Lots (12), so dass die Legierung (6) fest wird.

2. Verfahren gemäß Anspruch 1,
wobei das Reaktionsmittel (5) ein Nichtmetall, ein Halbmetall und/oder eine Keramik ist.

3. Verfahren gemäß Anspruch 1 oder 2,
wobei das Reaktionsmittel (5) eine kohlenstoffhaltige Verbindung, insbesondere Graphit ist, und der Hartstoff (8) Titancarbid gebildet wird.

4. Verfahren gemäß einem der Ansprüche 1 bis 3,
wobei das Lot (12) derart hergestellt wird, dass es eine Matte, eine Paste, ein gesintertes Material oder ein Band, insbesondere ein klebendes Band ist.

5. Verfahren gemäß einem der Ansprüche 1 bis 4,
wobei die Partikel plättchenförmig und/oder kugelförmig sind.

6. Verfahren gemäß Anspruch 5,
wobei die plättchenförmigen Partikel im Wesentlichen schichtartig planparallel angeordnet sind.

7. Verfahren gemäß einem der Ansprüche 1 bis 6,
wobei die Zusammensetzung der Legierung (6) derart gewählt wird, dass die Schmelztemperatur der Legierung (6) niedriger als die Beta-Transus-Temperatur des Grundwerkstoffs (3) ist.

8. Verfahren gemäß einem der Ansprüche 1 bis 7,
wobei die Legierung ein Hartlot ist, insbesondere mit einer Schmelztemperatur zwischen 750°C und 950°C.

9. Verfahren gemäß einem der Ansprüche 1 bis 8,
wobei die Wärmemenge und deren Einbringzeit derart bestimmt werden, dass die Temperaturen des Lots (12) und der Strömungsmaschinenkomponente niedriger als die Beta-Transus-Temperatur des Grundwerkstoffs (3) sind.

10. Verfahren gemäß einem der Ansprüche 1 bis 9,
wobei die Wärmemenge und deren Einbringzeit derart bestimmt werden, dass das Reaktionsmittel (5) in der chemischen Reaktion umgesetzt wird.

11. Verfahren gemäß einem der Ansprüche 1 bis 10,
wobei die Wärmemenge und deren Einbringzeit derart bestimmt werden, dass das Reaktionsmittel (5) teilweise durch Diffusion in den Grundwerkstoff (3) gelangt und dort unter Ausbildung des Hartstoffs (8) mit dem Grundwerkstoff (3) eine chemische Reaktion eingeht.

12. Verfahren gemäß einem der Ansprüche 1 bis 11,
wobei der Grundwerkstoff (3) eine Titanlegierung, insbesondere TiAl6V4, reines Titan und/oder reines Titan mit Zusatzstoffen, insbesondere Kohlenstoff als Zusatzstoff, aufweist.

13. Strömungsmaschinenkomponente mit einer Verschleißschutzschicht(4),
wobei die Verschleißschutzschicht (4) gemäß einem der Ansprüche 1 bis 12 hergestellt ist.
